# EUROPEAN PATENT SPECIFICATION

(11) **EP 1 553 331 B1**
(45) Date of publication and mention of the grant of the patent: **14.03.2007**
(21) Application number: 04100055.5
(22) Date of filing: 09.01.2004
(51) Int. Cl.: F16H 57/04

(54) **Cooling structure for a continuous variation transmission system of an all-terrain vehicle**
Kühlsystem für ein stufenloses Getriebe eines Geländefahrzeugs
Système de refroidissement pour transmission à variation continue de véhicule tout-terrain

(43) Date of publication of application: 13.07.2005
(73) Proprietor: Kwang Yang Motor Co., Ltd., San-Min Dist., Kaohsiung City (TW)
(72) Inventor: La, Tzu-Jung, Kaohsiung (TW); Ho, Chao Chang, Kaohsiung (TW)
(74) Representative: Ocvirk, Philippe

(56) References cited:
- JP-A- 5 026 328
- US-A- 5 976 044
- US-A1- 2002 112 905

## Description

### BACKGROUND OF THE INVENTION

### 1. Field of the Invention

The present invention concerns the cooling structure for a continuous variation transmission system of an all-terrain vehicle. It focuses mainly on the installation of an inlet and exhaust conduit each attached to the air inlet and air exhaust of the gearbox. Furthermore, an inlet box and an exhaust box are each attached to the conduits to prevent dust, dirt, and water from entering the gearbox. Additionally, the conduits are installed on the outer surface of the chassis for ease of assembly and maintenance, and also reduce the difficulty of installing other components.

### 2. Description of the Prior Art

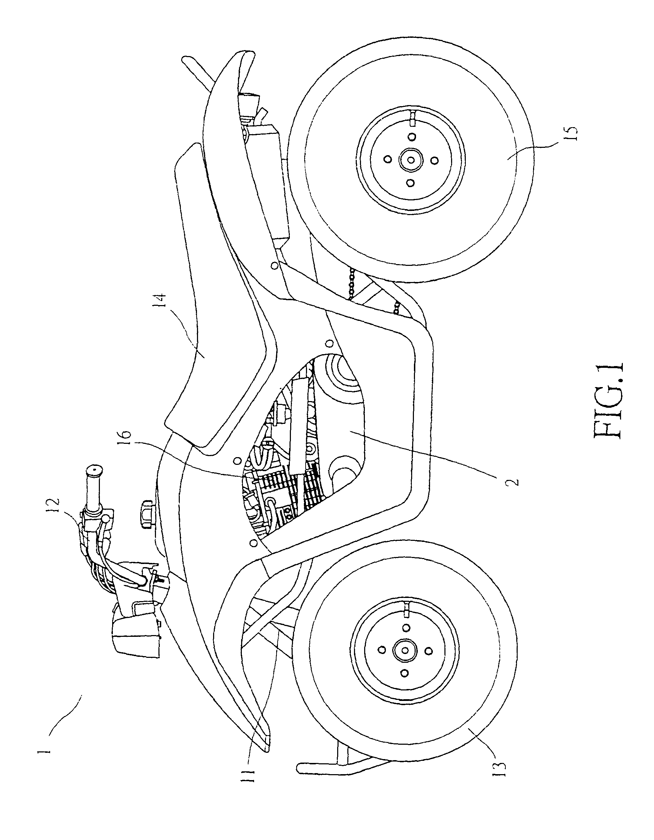

Referring to FIG 1, in general, all-terrain vehicles 1 are mainly composed of a chassis 11, a steering mechanism 12, front wheels 13, a riding seat 14, rear wheels 15, an engine 16 and the continuous variation transmission system 2. A steering mechanism 12 is installed in front of the chassis 11, with a set of from wheels 13 beneath the steering mechanism 12. There is a riding seat 14 on top of the chassis 11, and below the riding seat 14 is the engine 16. The engine 16 drives the continuous variation transmission system 2 by means of the crankshaft, and a set of rear wheels 15 is attached to the continuous variation transmission system 2.

When the all-terrain vehicle 1 is activated, fresh air is introduced from outside and mixing with fuel to become oil vapor. The oil vapor is then delivered into the engine 16 to initiate power to advance the piston into high-speed reciprocating motion. An interactive crankshaft drives the pulley mechanism and initiates turning of the rear wheels 15, which will lead in the concurrent turning of the front wheels 13 and achieve the purpose of movement.

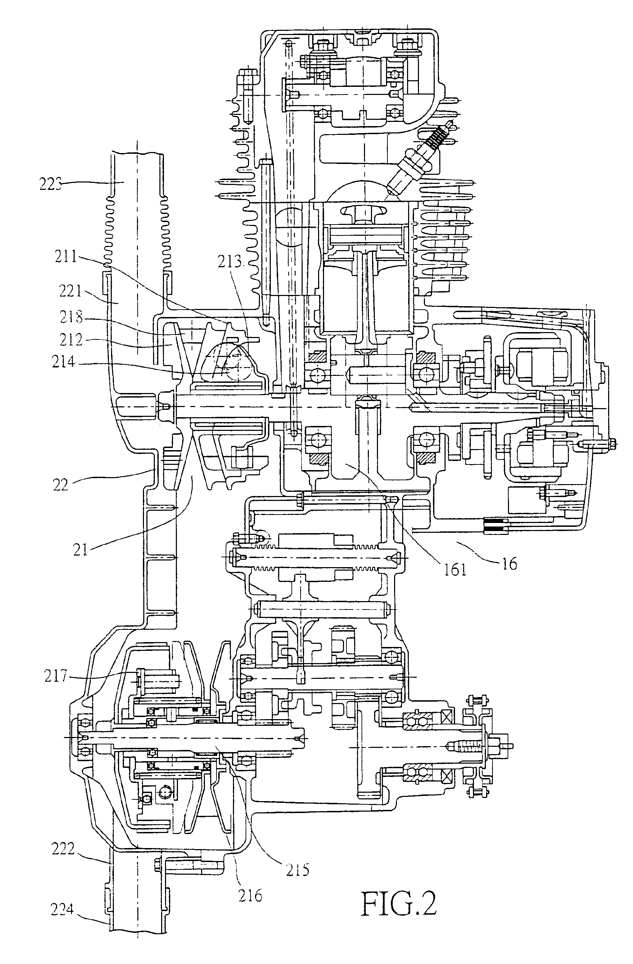

Referring to FIG 2, the continuous variation transmission system 2 in the all-terrain vehicle 1 consists of a pulley mechanism 21 placed inside a gearbox 22. Said pulley mechanism 21 is composed of a sliding disc 211 placed above said crankshaft 161; a driving plate 212 placed above said crankshaft 161 and to one side of said sliding disc 211; a bracket 213 placed above said crankshaft 161; and to the other side of said sliding disc 211, a counter weight 214 placed amid said sliding disc 211 and said bracket 213 due to the limitation of space; a follower shaft 215 which transmits the power to the rear wheels; a follower disc 216 placed on top of said follower shaft 215; a clutch 217 fixed on top of said follower shaft 215; and a transmission belt 218. Wherein, said sliding disc 211 and said driving plate 212 form the initiative disc of the pulley mechanism 21. One end of said transmission belt 218 is placed in between said driving disc 212 and said sliding disc 211, and the other end is placed amid said follower disc 216. Said gearbox 22 has an air inlet 221 and an air exhaust 222 with an inlet conduit 223 attached to said air inlet 221 and an exhaust conduit 224 attached to said air exhaust 222.

Inside the combustion chamber of the vehicle engine 16, the power initiated from combustion explosion will advance the piston into a high-speed reciprocating motion, and consquently initiate the spinning of the crankshaft 161. Said sliding disc 211 and said driving disc 212 will spin concurrently and in consequence speed up the spinning of the follower disc 216. Via said clutch 217, said follower shaft 215 will be driven to speed up the spinning and increase the advancing speed of the vehicle. By this time, the high heat produced from spinning of pulley mechanism 21 has to be cooled down by introducing outside cool air from the air inlet conduit 223, and passing through the air inlet 221 to enter the gearbox 22. The hot air will then pass through the exhaust conduit 224 from the air exhaust 222 and exhaust to the outside, to prevent the pulley mechanism 21 from being damaged by overheating.

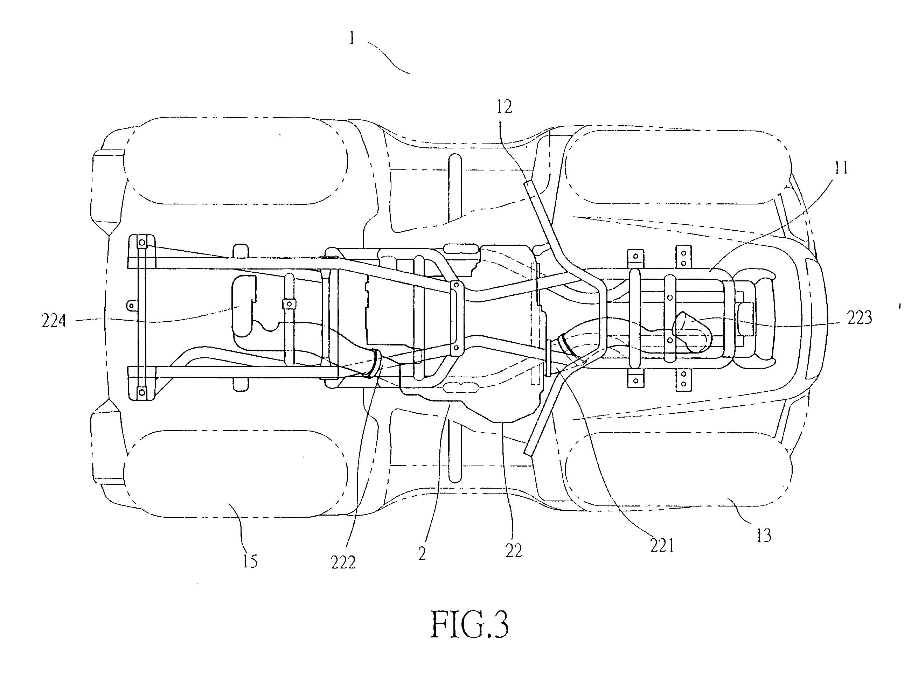

Referring to FIG 3, the configuration of the prior art cooling structure for a continuous variation transmission system 2 of the all-terrain vehicle 1 has the inlet conduit 223 and the exhaust conduit 224 of the gearbox 22 placed above the chassis 11 of the all-terrain vehicle 1. Therefore, when an exterior appearance or accessory design change is to be made, it will be affected adversely by the installation of the inlet conduit 223 and the exhaust conduit 224. This installation will bring about limitations for any of the intended above-mentioned design changes on the vehicle and also add to the difficulty of any design alteration. Moreover, there is no extra space beneath the vehicle for other components, such as a compartment or auxiliary component (for example, a battery, a fuel tank or an air filter). If other components are to be installed, the inlet conduit 223 and the exhaust conduit 224 will have to be extended downwards. However, there is a limit to the total height of an all-terrain vehicle 1. Furthermore, when the all-terrain vehicle 1 is moving along the seaside or in the countryside, the inlet conduit 223 and the exhaust conduit 224 have to be installed at a suitable height to prevent dust, dirt, and water from entering the gearbox 22. Therefore, by extending the inlet conduit 223 and the exhaust conduit 224 downwards to install other components, the pulley mechanism will be damaged easily. Also, due to the fact that the inlet conduit 223 and exhaust conduit 224 of the gearbox 22 in the prior art all-terrain vehicle 1 are placed directly above the chassis 11 of the all-terrain vehicle 1, when the mechanical parts are to be maintained, the parts have to be taken apart one by one from the upper riding seat 14 or the body cover. This will cause great inconvenience in assembly and maintenance and also increase difficulty in installing other components.

Acknowledging the aforementioned, the prior art all-terrain vehicle has the cooling structure for a continuous variation transmission system placed beneath the chassis. This adds to the limitations and difficulty of changing the vehicle's design, causes great inconvenience in assembly and maintenance and also increases difficulty in installing other components. Consequently, it is essential to refine the design.

US 5,976,044, which constitutes the closest prior art, discloses a similar all-terrain vehicle with a cooling structure for a belt transmission. The transmission is installed on the chassis of the all-terrain vehicle. A gearbox covers the transmission and has an air inlet at its front and two exhausts, one of which at its rear. An inlet conduit is attached to the inlet and an exhaust conduit is attached to each exhaust. For cooling the transmission, the inlet conduit is used to draw cool air from outside into the gearbox and then the hot air is voided through the exhaust conduits. In similar fashion to the prior art described above, the cooling structure according to US 5,976,044 and in particular the inlet conduit and both exhaust conduits are arranged inside the chassis.

### SUMMARY OF THE INVENTION

It is the major object of the present invention to provide an improved cooling structure for a continuous variation transmission system of an all-terrain vehicle. Primarily, the present invention has an inlet conduit attached to the air inlet of the gearbox, and an inlet box attached to the inlet conduit; an exhaust conduit is also attached to the air exhaust of the gearbox, with an exhaust box attached to the exhaust conduit. This is to prevent dust, dirt, and water from entering the gearbox. Furthermore, the inlet and exhaust conduit are installed on the outer surface of the chassis, revealing itself outside the body cover. The present invention enables ease of assembly and maintenance, and also reduces the difficulty in installing other components.

### BRIEF DESCRIPTION OF THE DRAWINGS

FIG. 1 is a perspective view of a prior art all-terrain vehicle;
FIG. 2 is a perspective view of a prior art variation transmission system;
FIG. 3 is a bottom view of a prior art all-terrain vehicle variation transmission system configuration;
FIG. 4 is a side view of the present invention all-terrain vehicle;
FIG 5 is an exterior view of the cooling structure of the variation transmission system of the present invention;
FIG. 6 is an exploded view of the cooling structure of the variation transmission system of the present invention, combined with mudguards;
FIG. 7 is a side view of another preferred embodiment of the present invention.

### DETAILED DESCRIPTION OF THE PREFERED EMBODIMENT

For the purpose of promoting an understanding of the principles of the invention, reference will now be made to the embodiment illustrated in the drawings. Specific language will be used to describe same. It will, nevertheless, be understood that no limitation of the scope of the invention is thereby intended, such alterations and further modifications in the illustrated device, and such further applications of the principles of the invention as illustrated herein being contemplated as would normally occur to one skilled in the art to which the invention relates.

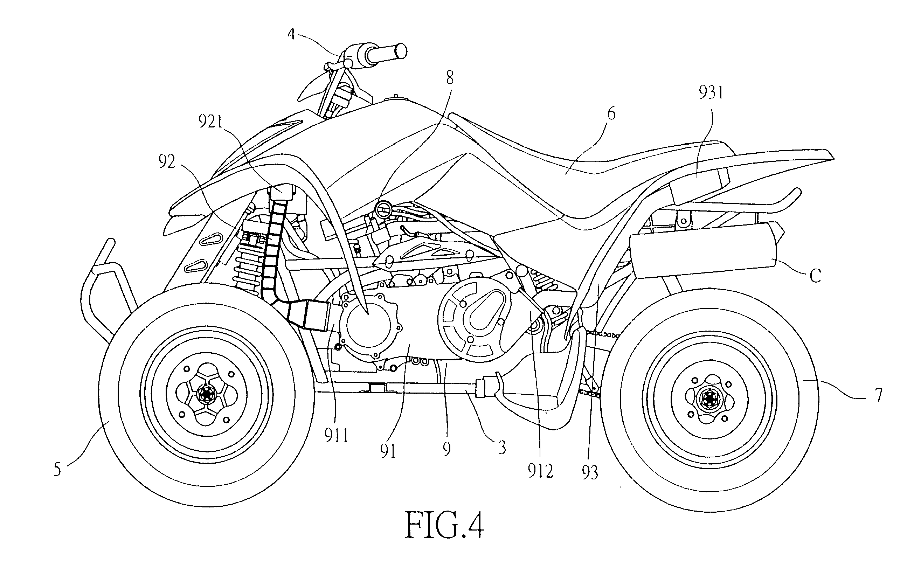

Referring to FIG 4, similar to the prior art all-terrain vehicles, the present invention is composed of a chassis 3, a steering mechanism 4, front wheels 5, a riding seat 6, rear wheels 7, an engine 8, and the continuous variation transmission system 9. A body cover 31 is installed on said chassis 3, and on the outer surface of said body cover 31 are the extended installations, a front and rear mud guard A and B respectively. On the front of said body cover 31, a steering mechanism 4 is installed; beneath said steering mechanism 4 is a set of front wheels 5. A riding seat 6 is installed above the chassis 3, and beneath the riding seat 6 is an engine 8. Said engine 8 drives the continuous variation transmission system 9 by a crankshaft, and a set of rear wheels 7 is attached to said continuous variation transmission system 9.

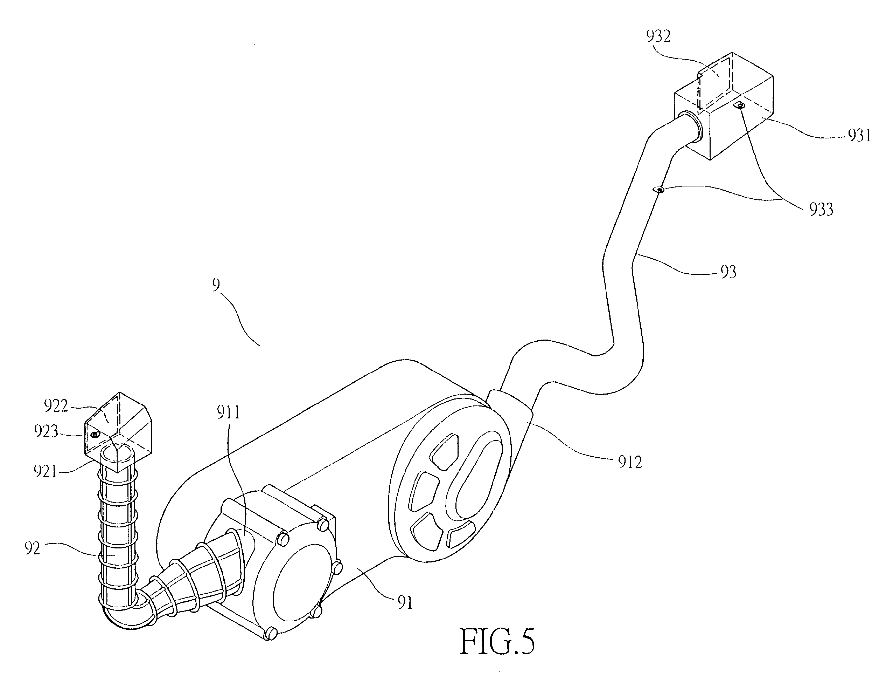

Referring to FIG 5, the present invention cooling structure for a continuous variation transmission system 9 is mainly composed of a gearbox 91, an inlet conduit 92, and an exhaust conduit 93. Said gearbox 91 has an air inlet 911 and an air exhaust 912 installed, and since the pulley mechanism inside the gearbox 91 is the same as the prior art, unnecessary details will not be given here. Said inlet conduit 92 is a hollow elbow duct, one end attached to the gearbox 91 air inlet 911, and the other end attached to an inlet box 921. Said inlet box 921 is a box with a port 922, and said port 922 faces the center of the body. Furthermore, the inlet box 921 has a fixing installation 923 on the two sides of the port 922. Said exhaust conduit 93 is also a hollow elbow pipe, with one end attached to the gearbox 91 exhaust 912, and the other end attached to an exhaust box 931. Said exhaust box 931 is a box with a port 932, and said port 932 faces the center of the body. Furthermore, the exhaust box 931 has a fixing installation 933 on the two sides of the port 932.

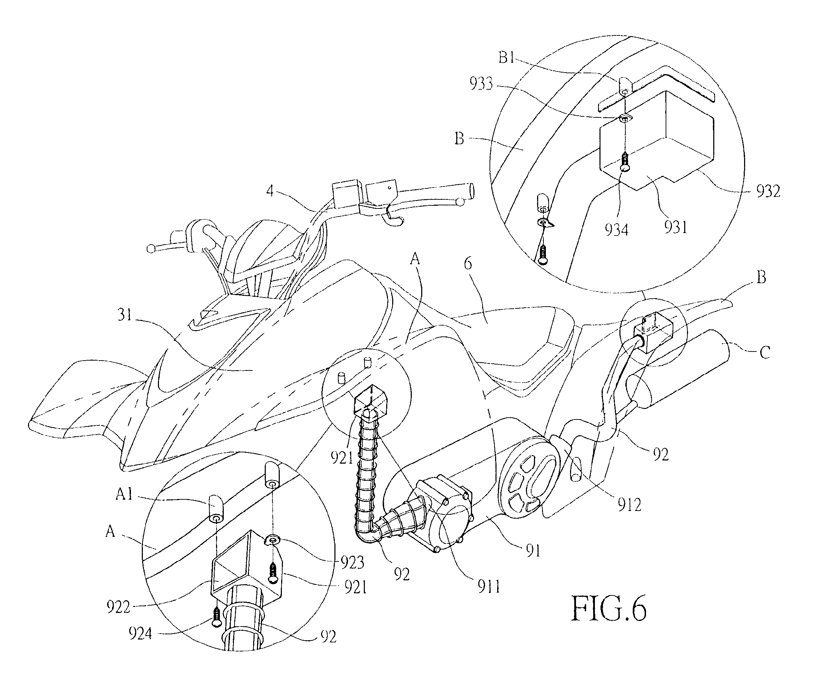

With reference to FIG 6, the present invention cooling structure for a continuous variation transmission system 9 is installed on one side of the body when being assembled, revealing itself outside the body cover 31. Said inlet conduit 92 is extended in front of the engine until it reaches the below of the front mud guard A. A fixing screw element 924 secures the inlet box 921 fixing installation 923 to a protruding post A 1 below the front mudguard A. Again, said exhaust conduit 93 is extended to the rear of the engine until it reaches below the rear mud guard B. Likewise, a fixing screw element 934 secures the exhaust box 931 fixing installation 933 to a protruding post B 1 below the rear mudguard B. In addition, both the inlet box 921 and the exhaust box 931 are placed above the tail of the exhaust pipe C, and situated on the outer surface of chassis 3.

Since both the inlet box 921 and the exhaust box 931 are placed above the tail of the exhaust pipe C, when the vehicle moves along the seaside or wet ground, it prevents water from entering the variation transmission system 9 through the inlet and exhaust conduit 92 and 93 respectively and cause damage to the pulley mechanism. With the design of the inlet and exhaust box 921 and 931 ports 922 and 932, and the installation of the inlet and exhaust box 921 and 931 below the front and rear mud guards A and B, dust and dirt are being prevented from entering the gearbox. Furthermore, having the inlet and exhaust conduit 921 and 931 installed on the outer surface of the chassis 3 and revealing itself outside the body cover 31, it reduces the difficulty of the installation of other components, and increases the variety in the outer appearance designs.

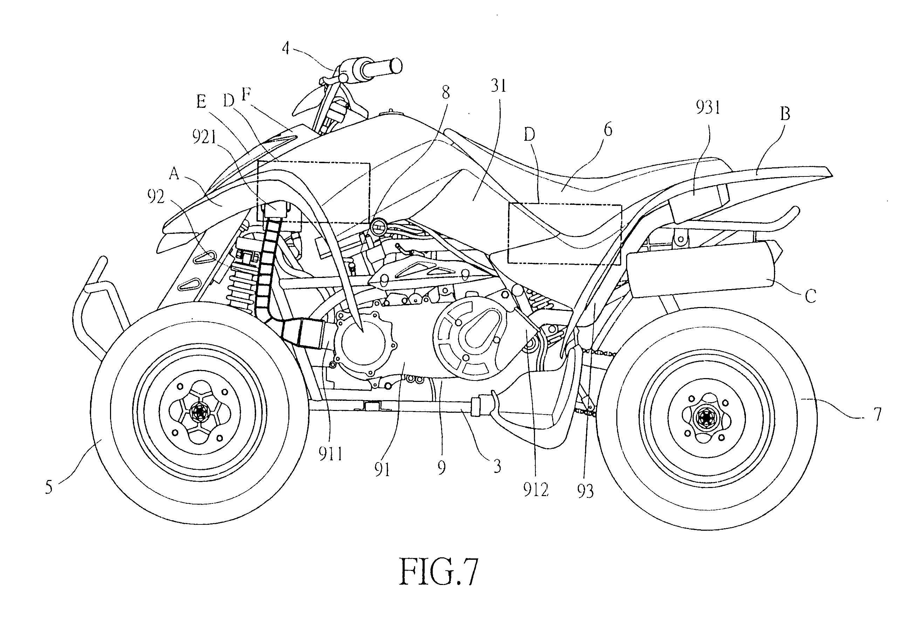

Shown in FIG 7 is another preferred embodiment of the present invention. A compartment D can be installed in front of the chassis 3 or underneath the riding seat; or a front light E can be installed in the front cover F. The present invention cooling structure for a continuous variation transmission system of an all-terrain vehicle is installed on one side of the chassis 3, revealing itself outside the vehicle body cover 31.Therefore, the present invention can be maintained without disassembling any vehicle component. At the same time, it will enable ease of assembly and maintenance, and reduce the difficulty in installing other components.

To sum up, with the design of the inlet box and exhaust box, the present invention can prevent water, dust and dirt from entering the gearbox effectively. Furthermore, the inlet and exhaust conduit are installed on the outer surface of the chassis, revealing itself outside the body cover. It will result in ease of assembly and maintenance, and also reduce the difficulty of the installation of other components. The present invention has proved to be more effective than prior art and is an advancement on the prior art.

It will be understood that each of the elements described above, or two or more together may also find a useful application in other types of methods differing from the type described above.

## Claims

1. A cooling structure for a continuous variation transmission system of an all-terrain vehicle,
the continuous variation transmission system (9) installed on the chassis (3) of the all-terrain vehicle; said cooling structure comprising : a gearbox (91) covering the continuous variation transmission system, with an air inlet (911) at the front of said gearbox and an exhaust (912) at the rear of said gearbox,
an inlet conduit (92) attached to the air inlet, and an exhaust conduit (93) attached to the exhaust, using the inlet conduit to draw cool air from outside into the gearbox for cooling the continuous variation transmission system and then voiding the hot air through the exhaust conduit, and
a body cover (31) which is installed on the chassis (3),
**characterized in that**
said inlet conduit and exhaust conduit are installed on one side of the chassis (3) along with the continuous variation transmission system, said inlet conduit (92) and said exhaust conduit (93) being installed on the outer surface of said chassis (3), whereby said cooling structure reveals itself outside the body cover.

2. The cooling structure for a continuous variation transmission system of an all-terrain vehicle as claimed in claim 1, wherein an inlet box (921) is attached to said inlet conduit (92).

3. The cooling structure for a continuous variation transmission system of an all-terrain vehicle as claimed in claim 1, wherein an exhaust box (931) is attached to said exhaust conduit (93).

4. The cooling structure for a continuous variation transmission system of an all-terrain vehicle as claimed in claim 2 and 3, wherein said inlet and exhaust box (921, 931) are installed beneath the mudguards (A, B), and are sheltered by the mudguards.

5. The cooling structure for a continuous variation transmission system of an all-terrain vehicle as claimed in claim 2 and 3, wherein the height of said inlet and exhaust box (921,931) is above the exhaust (C) of the engine exhaust conduit.

## Patentansprüche

1. Kühlsystem für ein stufenloses Getriebe eines Geländefahrzeugs, wobei das stufenlose Getriebe (9) am Fahrgestell (9) des Geländefahrzeugs eingebaut ist, wobei das Kühlsystem Folgendes umfasst:
ein Getriebegehäuse (91), das das stufenlose Getriebe abdeckt, wobei ein Lufteinlass (911) an der Vorderseite des Getriebegehäuses und ein Auslass (912) an der Rückseite des Getriebegehäuses angeordnet ist;
eine Einlassleitung (92), die am Lufteinlass befestigt ist, und eine Auslassleitung (93), die am Auslass befestigt ist, wobei die Einlassleitung zum Ansaugen kühler Luft von außen in das Getriebegehäuse verwendet wird, um das stufenlose Getriebe zu kühlen und dann die heiße Luft durch die Auslassleitung auszulassen; und
eine Karosserie (31), die am Fahrgestell (3) eingebaut ist,
**dadurch gekennzeichnet, dass**
die Einlassleitung und die Auslassleitung an einer Seite des Fahrgestells (3) zusammen mit dem stufenlosen Getriebe eingebaut sind, wobei die Einlassleitung (92) und die Auslassleitung (93) an der Außenfläche des Fahrgestells (3) eingebaut sind, wodurch das Kühlsystem sich außerhalb der Karosserie zeigt

2. Kühlsystem für ein stufenloses Getriebe eines Geländefahrzeugs nach Anspruch 1, wobei ein Einlasskasten (921) an der Einlassleitung (92) befestigt ist.

3. Kühlsystem für ein stufenloses Getriebe eines Geländefahrzeugs nach Anspruch 1, wobei ein Auslasskasten (931) an der Auslassleitung (93) befestigt ist

4. Kühlsystem für ein stufenloses Getriebe eines Geländefahrzeugs nach Anspruch 2 und 3, wobei der Einlasskasten (921) und der Auslasskasten (931) unter den Kotflügeln (A, B) eingebaut und durch die Kotflügel geschützt sind

5. Kühlsystem für ein stufenloses Getriebe eines Geländefahrzeugs nach Anspruch 2 und 3, wobei die Höhe des Einlasskastens (921) und des Auslasskastens (931) über dem Auspuff (C) der Motorauslassleitung liegt

## Revendications

1. Structure de refroidissement pour un système de transmission à variation continue d'un véhicule tout-terrain,
le système de transmission à variation continue (9) étant installé sur le châssis (3) du véhicule tout-terrain; ladite structure de refroidissement comprenant :
une boîte de vitesse (91) recouvrant le système de transmission à variation continue, avec une admission d'air (911) à l'avant de ladite boîte de vitesse et un échappement (912) à l'arrière de ladite boîte de vitesse,
un conduit d'admission (92) fixé à l'admission d'air, et un conduit d'échappement (93) fixé à l'échappement, utilisant le conduit d'admission pour entraîner de l'air froid depuis l'extérieur dans la boîte de vitesse pour refroidir le système de transmission à variation continue et évacuant ensuite l'air chaud à travers le conduit d'échappement, et
une carrosserie (31) qui est installée sur le châssis (3),
**caractérisée en ce que**
ledit conduit d'admission et ledit conduit d'échappement sont installés sur un côté du châssis (3) avec le système de transmission à variation continue, ledit conduit d'admission (92) et ledit conduit d'échappement (93) étant installés sur la surface extérieure dudit châssis (3), moyennant quoi ladite structure de refroidissement apparaît à l'extérieur de la carrosserie

2. Structure de refroidissement pour un système de transmission à variation continue d'un véhicule tout-terrain selon la revendication 1, dans laquelle une boîte d'admission (921) est fixée audit conduit d'admission (92)

3. Structure de refroidissement pour un système de transmission à variation continue d'un véhicule tout-terrain selon la revendication 1, dans laquelle une boîte d'échappement (931) est fixée audit conduit d'échappement (93).

4. Structure de refroidissement pour un système de transmission à variation continue d'un véhicule tout-terrain selon les revendications 2 et 3, dans laquelle lesdites boîtes d'admission et d'échappement (921, 931) sont installées en dessous des garde-boue (A, B), et sont protégées par les garde-boue

5. Structure de refroidissement pour un système de transmission à variation continue d'un véhicule tout-terrain selon les revendications 2 et 3, dans laquelle la hauteur desdites boîtes d'admission et d'échappement (921, 931) est au-dessus de l'échappement (C) du conduit d'échappement de moteur
